# EUROPÄISCHE PATENTSCHRIFT

(11) **EP 1 239 017 B1**
(45) Veröffentlichungstag und Bekanntmachung des Hinweises auf die Patenterteilung: **28.01.2004**
(21) Anmeldenummer: 01104544.0
(22) Anmeldetag: 05.03.2001
(51) Int. Cl.: C09J 5/06

(54) **Verfahren für strukturelles Kleben auf Lackoberflächen**
Method for structural bonding on painted surfaces
Procédé de collage structurel sur des surfaces peintes

(43) Veröffentlichungstag der Anmeldung: 11.09.2002
(73) Patentinhaber: Sika Schweiz AG, 8064 Zürich (CH)
(72) Erfinder: Merz, Peter W., 8832 Wollerau (CH)
(74) Vertreter: Isler, Jörg

(56) Entgegenhaltungen:
- WO-A-94/04470

## Beschreibung

Die vorliegende Erfindung betrifft ein neues Verfahren für das strukturelle bzw. hochfeste Kleben lakkierter Körper wie Karosserien oder Bauteilen, insbesondere lackierter Metall- oder Kunststoffbauteile.

Im Fahrzeugbau besteht der Trend zur Leichtbauweise, zur Fertigung mit grösseren Fertigbauteilen (Modulen) sowie hin zur Erhöhung der Torsionssteifigkeit der Karosse bzw. von Anbauteilen, wie z.B. Türen, Frontund Heckklappen etc. Eine wesentliche Voraussetzung dazu ist der Einsatz von Klebstoffen anstelle von Schweisspunkten und Dichtstoffen. Schweisspunkte werden zukünftig im wesentlichen nur noch für die Positionierung der Teile (Masshaltigkeit) bei der Fertigung erforderlich sein. Dabei besteht zunehmend der Wunsch, dass die Klebstoffe die Bauteile strukturell bzw. kraftschlüssig mit hoher Festigkeitsübertragung verbinden, und die geklebte Struktur sich wie ein einheitliches Teil verhält.

Das strukturelle Verbinden im Karosseriebau, wo hochwertige Klebstoffe (sog. Rohbauklebstoffe) auf beölten metallischen Substraten zur Anwendung gelangen, hat bereits einen hohen Qualitätsgrad erreicht. Heute sind auch bereits sogenannte "crashfeste" Rohbauklebstoffe bekannt, welche in der Lage sind, bei einem Crash nicht zu einem Klebstoffbruch zu führen, sondern den Verbund sogar zwingen können, sich zu falten.

Hingegen ist das strukturelle Verbinden in der Montage, wo lackierte Metalloberflächen vorliegen, noch nicht befriedigend gelöst, da der Lackaufbau selbst die strukturellen Kräfte nicht aufnehmen kann. Der Lackaufbau besteht in der Regel aus folgenden Schichten: Nach der Entfettung werden die Metalloberflächen phosphatiert, mit kathodischer Tauchlackierung (KTL) beschichtet und im Ofen bei hohen Temperaturen um 180°C während ca. 30 Minuten eingebrannt. Diese KTL-Schicht ist verantwortlich für den Korrosionsschutz. Im anschliessenden Lackierprozess wird ein "Füller" und ein Basislack, gegebenenfalls zusätzlich noch ein Decklack, aufgebracht, welche wiederum in einem Umluftofen bei Temperaturen um 130°C während ca. 20 Minuten getrocknet werden. Die Praxis hat nun gezeigt, dass die Haftung der KTL zur Phosphatschicht oder auch des Füllers zum Decklack bei hohen Belastungen versagen kann und somit festigkeitsbestimmend ist. Ferner ist in der Lackschicht eine Sollbruchstelle bewusst vorhanden, damit im Falle eines Steinschlages die Beschädigung nur in der Decklackschicht selbst (keine optische Farbänderung) und nicht zwischen Füllerschicht und Basislack erfolgt. Diese Sollbruchstelle lässt nur eine Verklebung mit einem Schubmodul von ca. 5 MPa zu.

Gemäss dem Stand der Technik wird folgendes Verfahren, z.B. bei der Scheibenverklebung, angewendet. Entweder wird direkt auf dem Decklack geklebt oder der KTL-beschichtete Karosserieflansch wird mit einem Klebeband oder mit einer organischen Masse, wie z.B. einem PVC-Plastisol, maskiert. Das Plastisol wird z.B. mittels IR-Strahler geliert und erreicht dabei eine feste Konsistenz. Am Ende des Lackierprozesses und vor der Scheibenmontage wird die Flanschmaskierung meistens manuell wieder entfernt und die Direktverglasung auf der KTL durchgeführt. Dieses Verfahren, wie oben beschrieben, lässt ein zuverlässiges Verkleben mit hohen strukturellen Kräften nicht zu, da bei Scherkräften > 8-10 MPa die Haftung der KTL-Schicht versagt.

Die vorliegende Erfindung hat zum Ziel, ein verbessertes Verfahren bereitzustellen, welches die Begrenzungen des Stands der Technik überwindet und strukturelles Verkleben von > 8 MPa in der Endmontage möglich macht.

Die Aufgabe wurde dadurch gelöst, dass die Montage direkt auf einem strukturellen Polymer, wie z.B. einem Rohbauklebstoff, entsprechend Anspruch 1 erfolgt.

Das erfindungsgemässe Verfahren besteht aus folgenden Schritten. Im Karosseriebau wird ein strukturelles Polymer, insbesondere ein Rohbauklebstoff, mindestens an den Stellen auf die zu verklebende Metall- oder Kunststoffoberfläche, insbesondere das üblicherweise beölte Metallblech, aufgetragen, auf denen nachher in der Montage geklebt werden soll.

Die Oberflächen können gegebenenfalls vor dem Auftrag des strukturellen Polymers mit einem die Haftung und/oder Alterungsbeständigkeit verbessernden Verfahren, oder einer die Haftung und/oder Alterungsbeständigkeit verbessernden Behandlung resp. Beschichtung vorbereitet sein, wie beispielsweise Chromatierung, Beflammen, Anodisieren, Primerbeschichtung, Behandlung mit nicht-filmbildenden Haftvermittlern, etc. Weitere Verfahren, Behandlungen oder Beschichtungen sind dem Fachmann bekannt.

Im erfindungsgemässen Verfahren übernimmt das strukturelle Polymer bei der Verklebung von Metalloberflächen den Korrosionsschutz anstelle der KTL-Beschichtung. Unabhängig von der Art der Oberfläche sollte der Klebstoff in einer solchen Schichtstärke aufgetragen werden, dass nach Auftrag auch alle Unebenheiten und Kanten beschichtet sind. Eine Flachraupe von 0.5 bis 3 mm ist üblicherweise ausreichend. Ein dickerer Auftrag ist selbstverständlich möglich aber aus ökonomischen und ökologischen Aspekten uninteressant. Nach dem Lackierprozess wird der lackierte Klebstoff für die Verklebung, z.B. für die Scheibenverklebung, bearbeitet. Dabei müssen Lackschicht und eine dünne Schicht von üblicherweise ca. 0.2 mm des strukturellen Polymers, insbesondere des Rohbauklebstoffs, entweder thermisch, wie z.B. mit Laser, oder mechanisch durch z.B. Fräsen, Schleifen, Hobeln, Feilen, Bürsten etc. entfernt werden. Dieses Entfernen (thermisch und/oder mechanisch) kann beispielsweise automatisch mit einem Roboter problemlos durchgeführt werden und ist einfach, da keine Gefahr für eine Beschädigung der Oberfläche des Grundwerkstoffs, wie z.B. der Verzinkung eines Stahlblechs, besteht. Ferner hinterlässt eine sachgemässe Entfernung der Lackierung stets einen qualitativ gleichbleibenden Untergrund für den anschliessend aufgebrachten Montageklebstoff, was eine hohe Prozesssicherheit und eine robuste Verbundqualität gewährleistet. Die Lackentfernung kann getrennt vom Auftrag des Montageklebstoffes oder simultan kurz vor oder während dem Auftrag des Montageklebstoffes erfolgen. Simultan heisst, dass die auf dem Rohbauklebstoff liegende Lackschicht abgefräst und im gleichen Arbeitsschritt der Montageklebstoff, z.B. als solcher oder aufgebracht auf ein Bauteil oder Modul, auf die so freigelegte Oberfläche aufgetragen resp. aufgedrückt wird.

In einer weiteren Ausführungsform können ein Deckband oder eine organische Masse - analog zum üblichen Verfahren, wie z.B. mit PVC-Plastisolen (wie oben beschrieben) - auf das frisch applizierte, vorvernetzte oder vollständig ausgehärtete strukturelle Polymer (Rohbauklebstoff) gelegt werden, welche dann vor der Montage wieder entfernt werden.

Das erfindungsgemässe Verfahren lässt sich für Modulverklebungen, insbesondere im Fahrzeugbau, einschliesslich Scheibenverklebung verwenden. Solche Verklebungen liegen auch im Rahmen der vorliegenden Erfindung.

Unter strukturellen Polymeren, insbesondere Rohbauklebstoffen, werden im Rahmen der vorliegenden Erfindung Klebstoffe mit Schubmodulen > 5 MPa, insbesondere > 8 MPa verstanden.

Bevorzugte Klebstoffe sind beispielsweise Epoxid-Klebstoffe, Kautschuk-Klebstoffe, Polyurethan-Klebstoffe und Acrylat-Klebstoffe.

Der Montageklebstoff ist ein vorzugsweise bei Umgebungstemperatur härtendes Reaktivmaterial, das einoder zweikomponentig sein kann und nach dem Härten hohe Biegefestigkeit und Torsionssteifigkeit bringt sowie ein Schubmodul von >5 MPa, insbesondere >8 MPa. Geeignete Montageklebstoffe sind z.B. Polyurethan-Klebstoffe, Acrylat- Klebstoffe, Schmelzklebstoffe und silanvernetzende Klebstoffe.

Das erfindungsgemässe Verfahren ist einfach und robust, wirtschaftlicher im Vergleich zum Stand der Technik, ermöglicht ein hochstrukturelles Verbinden mit hoher Torsionssteifigkeit und eine hohe alterungsbeständige Verbundqualität.

Das folgende Beispiel soll die Erfindung weiter veranschaulichen, den Umfang der Erfindung aber in keiner Weise beschränken.

### Beispiel

Ein Stahlblech mit einem Beölungsgrad von 2 bis 3 g/m² wird mit einem hoch-strukturellen Rohbauklebstoff, z.B. SikaPower-490/5, in einer Schichtstärke von ca. 1 mm beschichtet, durch die Vorbehandlungsbäder gebracht, im KTL-Ofen bei einer Temperatur bei 180°C während 30 Minuten eingebrannt und im nachfolgenden Lackierprozess mit Füller, Basislack und Decklack beschichtet. Nachdem der Lack (ca. 0.2 mm Schichtstärke) auf dem Rohbauklebstoff mit einem Fräser entfernt worden ist, werden strukturelle Klebstoffe mit hohen Schubmodulen von > 5 MPa auf diesen frisch vorbereiteten Untergrund in der Form einer Dreiecksraupe aufgetragen. Nach einer 7-tägigen Härtungszeit mit Luftfeuchtigkeit, sowie nach einer weiteren 7-tägigen Lagerung im Wasser bei Raumtemperatur und ferner nach einer weiteren 7-tägigen Lagerung im Kataplasma (70°C und 100% relative Luftfeuchte) wurden ausgezeichnete Haftungsqualitäten beobachtet.

## Patentansprüche

1. Verfahren für das Kleben auf Oberflächen nach deren Lackieren, **dadurch gekennzeichnet, dass** die zu verklebende Oberfläche eine Metalloberfläche oder eine Kunststoffoberfläche ist, dass die Oberfläche mindestens im Bereich der Klebfläche mit mindestens einem strukturellen Polymer beschichtet und dann mit mindestens einer Lackschicht versehen wird, und dass die mindestens eine Lackschicht vor dem Aufbringen eines Montageklebstoffs von dem mindestens einen strukturellen Polymer entfernt wird.

2. Verfahren gemäss Anspruch 1, **dadurch gekennzeichnet, dass** die Oberfläche eine Metalloberfläche ist.

3. Verfahren gemäss Anspruch 1 oder 2, **dadurch gekennzeichnet, dass** das strukturelle Polymer direkt auf die Oberfläche aufgebracht wird, insbesondere auf eine Metalloberfläche, die keiner KTL-Beschichtung unterzogen wurde.

4. Verfahren gemäss einem der Ansprüche 1 bis 3, **dadurch gekennzeichnet, dass** auf das strukturelle Polymer nach dessen Aufbringen auf eine Oberfläche eine organische Masse oder ein Deckband, aufgebracht wird, die resp. das vor der Lackierung wieder entfernt wird.

5. Verfahren gemäss einem der Ansprüche 1 bis 4, **dadurch gekennzeichnet, dass** das strukturelle Polymer ein Rohbauklebstoff ist.

6. Verfahren gemäss Anspruch 5, **dadurch gekennzeichnet, dass** der Rohbauklebstoff hohe Festigkeiten aufnehmen kann und ein Schubmodul von >5 MPa, vorzugsweise >8 MPa aufweist.

7. Verfahren gemäss einem der Ansprüche 1 bis 6, **dadurch gekennzeichnet, dass** die Entfernung der Lackschichten mechanisch, beispielsweise mittels Schleifen, Hobeln, Feilen, Bürsten und insbesondere mittels Fräsen durchgeführt wird.

8. Verfahren gemäss einem der Ansprüche 1 bis 7, **dadurch gekennzeichnet, dass** der Montageklebstoff hohe Festigkeiten aufnehmen kann und ein Schubmodul von >5 MPa, vorzugsweise >8 MPa aufweist.

9. Verfahren gemäss einem der Ansprüche 1 bis 8, **dadurch gekennzeichnet, dass** der Montageklebstoff aufgebracht auf ein Bauteil oder Modul eingesetzt wird.

10. Verwendung des Verfahren gemäss einem der Ansprüche 1 bis 9 für das Verkleben von Bauteilen bzw. Modulen, insbesondere von Fahrzeugen.

## Claims

1. Method for adhesive bonding on surfaces after their coating, **characterized in that** the surface to be bonded is a surface of metal or a surface of plastic, **in that** the surface at least in the region of the bond area is coated with at least one structural polymer and then provided with at least one coating film, and **in that** the at least one coating film is removed from the at least one structural polymer before an assembly adhesive is applied.

2. Method according to Claim 1, **characterized in that** the surface is a surface of metal.

3. Method according to Claim 1 or 2, **characterized in that** the structural polymer is applied directly to the surface, in particular to a surface of metal which has not been subjected to cathodic electrocoating.

4. Method according to one of Claims 1 to 3, **characterized in that** after it has been applied to a surface the structural polymer has applied to it an organic composition or a masking tape which is removed again before coating.

5. Method according to one of Claims 1 to 4, **characterized in that** the structural polymer is a vehicle body adhesive.

6. Method according to Claim 5, **characterized in that** the vehicle body adhesive is able to accommodate high strengths and has a shear modulus of > 5 MPa, preferably > 8 MPa.

7. Method according to one of Claims 1 to 6, **characterized in that** the coating films are removed mechanically, for example by means of abrading, planing, filing, brushing and in particular by means of milling.

8. Method according to one of Claims 1 to 7, **characterized in that** the assembly adhesive is able to accommodate high strengths and has a shear modulus of > 5 MPa, preferably > 8 MPa.

9. Method according to one of Claims 1 to 8, **characterized in that** the assembly adhesive is used applied to a component or module.

10. Use of the method according to one of Claims 1 to 9 for the adhesive bonding of components and/or modules, in particular of vehicles.

## Revendications

1. Procédé de collage sur des surfaces qui ont été peintes, **caractérisé en ce que** la surface à coller est une surface métallique ou une surface en matière synthétique, **en ce que** la surface est revêtue d'au moins un polymère structurel au moins dans la zone de la surface à coller et est ensuite dotée d'au moins une couche de peinture et **en ce que** la couche de peinture au moins présente est enlevée du polymère structurel au moins présent avant l'application d'une colle de montage.

2. Procédé selon la revendication 1, **caractérisé en ce que** la surface est une surface métallique.

3. Procédé selon la revendication 1 ou 2, **caractérisé en ce que** le polymère structurel est appliqué directement sur la surface, en particulier sur une surface métallique qui n'a pas reçu un revêtement par immersion cathodique.

4. Procédé selon l'une quelconque des revendications 1 à 3, **caractérisé en ce qu'**une pâte organique ou une bande de recouvrement qui sont de nouveau enlevées avant la peinture sont appliquées sur le polymère structurel après son application sur une surface.

5. Procédé selon l'une quelconque des revendications 1 à 4, **caractérisé en ce que** le polymère structurel est une colle pour matériaux de construction bruts.

6. Procédé selon la revendication 5, **caractérisé en ce que** la colle pour matériaux de construction bruts peut prendre des résistances mécaniques élevées et présente un module de cisaillement > 5 MPa et de préférence > 8 MPa.

7. Procédé selon l'une quelconque des revendications 1 à 6, **caractérisé en ce que** l'enlèvement des couches de peinture s'effectue mécaniquement, par exemple par meulage, rabotage, limage, brossage et en particulier par fraisage.

8. Procédé selon l'une quelconque des revendications 1 à 7, **caractérisé en ce que** la colle de montage peut prendre des résistances mécaniques élevées et présente un module de cisaillement > 5 MPa et de préférence > 8 MPa.

9. Procédé selon l'une quelconque des revendications 1 à 8, **caractérisé en ce que** la colle de montage utilisée est appliquée sur un composant ou un module.

10. Utilisation du procédé selon l'une quelconque des revendications 1 à 9 pour le collage de composants ou selon le cas de modules, en particulier de véhicules.
